# EUROPEAN PATENT APPLICATION

(11) **EP 3 178 694 A1**
(43) Date of publication of application: **14.06.2017**
(21) Application number: 16203255.1
(22) Date of filing: 09.12.2016
(51) Int. Cl.: B60P 7/08, B62D 33/04

(54) **PANEL STRUCTURE POSESSING EMBEDDED TRANSPORTATION RAIL AND ITS MANUFACTURING METHOD**

(30) Priority: 09.12.2015 TR 201515795
(71) Applicant: Tirsan Treyler Sanayi Ve Ticaret Anonim Sirketi, 54580 Sakarya (TR)
(72) Inventor: ÇETIN, Volkan, 54580 Sakarya (TR)
(74) Representative: Dereligil, Ersin

(57) **Abstract**

It is a the panel structure (10) possessing transportation rail (11) that is used for the purpose of cargo tie down in transport compartments (9) of all kinds of vehicles, and it is characterized with an exterior board (12) that forms the exterior surface of panel structure (10), protects from external factors such as dust and rain, and contributes to structural integrity; an interior board (13) that forms the interior surface of panel structure (10), protects from internal factors such as dust and water, and contributes to structural integrity, and hosts the assembling process of transportation rail (11); filling material (14) that provides structural support between these exterior (12) and interior boards (13), and offer isolation against factors such as heat and sound; at least one assembly slot (15) of this filling material (14) that is formed on the surface of interior board (13); and a mold (16) that is placed on this assembly slot (15) and enables the interior board (13) to be shaped as desired without any damage.

## Description

### Technical Field

The invention is related to panels of transport compartments in all kinds of vehicles.

The invention is particularly related to panels which do not reduce the interior volume thanks to a method enabling embedded manufacturing of transportation rails that are used for the purpose of cargo tie down in transport compartments of all kinds of vehicles.

### Known State of the Technique

Generally, compartments that are specific to this purpose in transport vehicles provide protection for loads against external factors such as heat, rain, etc. Another purpose of these compartments is that they offer a structure that prevents displacement and shaking of loads during transportation. In known applications, these structures are rails and slots allowing transport compartment to be double-layered. These structures incorporate holes and/or hooks mediating load connection.

As stated above, transport compartments can be used as double-layered or loads in the vehicle can be fixed by means of pipes or profiles embedded in the mentioned rails on panels. In the existing technique, fiberboards that are reinforced with chemicals such as epoxy, polyester, etc. are frequently used in the panels in order to provide isolation for the transported load from external factors such as dust and rain.

In some of the known manufacturing methods of panels in transport compartments, the boards are shaped as desired while being manufactured by own processes of the manufacturer. However, in such methods, the following problems arise and prevent many manufacturers from opting for:
- Very long manufacturing time,
- The fact that process steps of manufacturing are easily affected by external factors such as dust, moisture and heat,
- High level of risk of defective manufacturing due to intense human activities,
- High first investment costs.

In ready-to-use fiberboards, on the contrary, the following advantages are in place:
- Shorter manufacturing time,
- The fact that process steps are not easily affected by external factors such as dust and moisture,
- More availability to mechanization,
- Low first investment costs.

Therefore, ready-to-use fiberboards are preferred by many manufacturers. On the other hand, since ready boards are supplied as engineered, boards may be broken or cracked during shaping and thus they cannot be shaped. For this reason, the mentioned rails are connected on panels directly and reduce the interior volume. One of the examples in the existing technique is a USA patent titled "Method of assembling a logistic rail to trailer wall" and numbered US2002100171.

Consequently, a development in the related technical area was necessitated by the requirement for panels which do not reduce interior volume thanks to a method enabling manufacturing of transportation rails as embedded which are used for cargo tie down in transport compartments of all kinds of vehicles, and by the insufficiency of the existing solutions.

### Intention of the Invention

The existing invention is related to a panel structure possessing embedded transportation rail which fulfills the requirements above, eliminates all disadvantages and brings some additional advantages, and to its manufacturing method.

Main purpose of panel structure and its manufacturing method in our invention presents a fixing structure for interior and exterior boards, filling material located between the boards, and fixation of loads to be transported without reducing interior volume of transport compartment thanks to transportation rail which is embedded into this filling material. Thereby, the risk of damage of load due to the fact that transportation rails do not protrude on panel surfaces is minimized while a certain space is saved.

Another purpose of the invention is to allow for a manufacturing method composed of spreading exterior board, applying the filling material, placing mold that connects transportation rails to assembly slots formed in filling materials and applying interior board on molds with filling material by means of pressure, and to enable interior boards to take the shape of molds. On this way, the boards are shaped as desired without any damage, and transportation rail and panel are assembled without reducing interior volume of transport compartment and decreasing the strength of panel. Filling materials and fiber-supported exterior board show resistance to panel, and contribute to structural integrity by fixing mold and rail.

In order to reach the purposes above most generally, a panel structure, which possesses transportation rail used for cargo tie down in transport compartments of all kinds of vehicles, and its manufacturing method were developed. Panel structure that was manufactured via this method comprises an exterior board that forms its outer surface, protects from external factors such as dust and rain and contributes structural integrity; an interior board that forms its inner surface, contributes to structural integrity by protecting from internal factors such as dust and water, and hosts the assembling process of transportation rail; filling material that provides structural support between exterior and interior boards, and offer isolation against factors such as heat and sound; at least one assembly slot of filling material that is formed on the surface of interior board; and a mold that is placed on assembly slot and enables the interior board to be shaped as desired without any damage.

Structural and characteristic specifications of the invention and all its advantages will be understood more clearly via the figures below and detailed explanations written by being referenced to these figures. Therefore, the evaluation should be made by taking these figures and detailed explanations into account.

### Figures that will facilitate understanding the invention

The existing invention should be evaluated through the figures with explanations below in order to understand its structure and advantages together with additional elements in the best way possible.
Figure -1: Section view of transport compartment that accommodates panel structure in our invention.
Figure - 2: General view of panel structure in our invention.
Figure - 3: Close-up view of panel structure in our invention.
Figure - 4: Section view of panel structure in our invention.

Drawings should not be scaled necessarily, and the details which are not required to understand the existing invention may have been neglected. Apart from that, the elements that are identical at least considerably or have identical functions at least considerably are shown with the same number.

### Part References

- 9: Transport compartment
- 10: Panel structure
- 11: Transportation rail
- 12: Exterior board
- 13: Interior board
- 14: Filling material
- 15: Assembly slot
- 16: Mold

### Detailed Explanation of the Invention

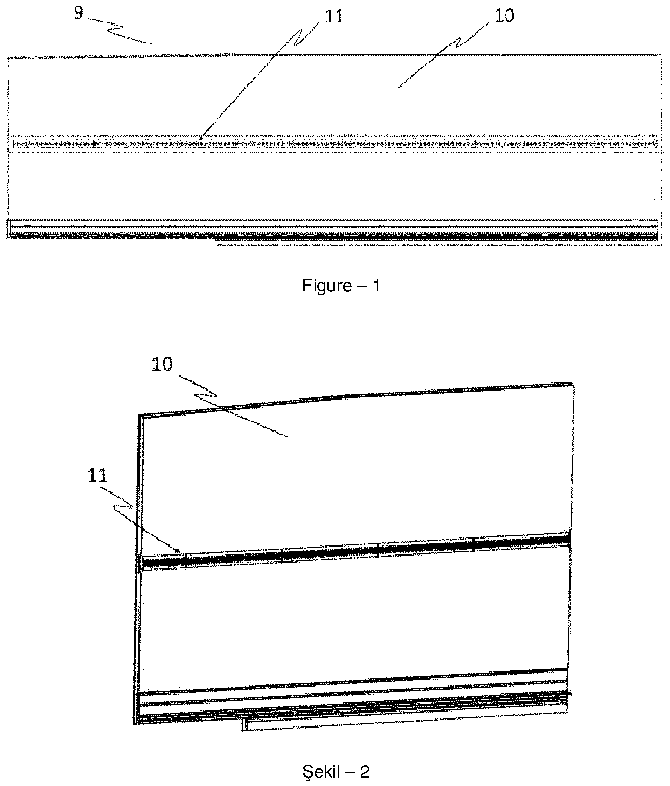

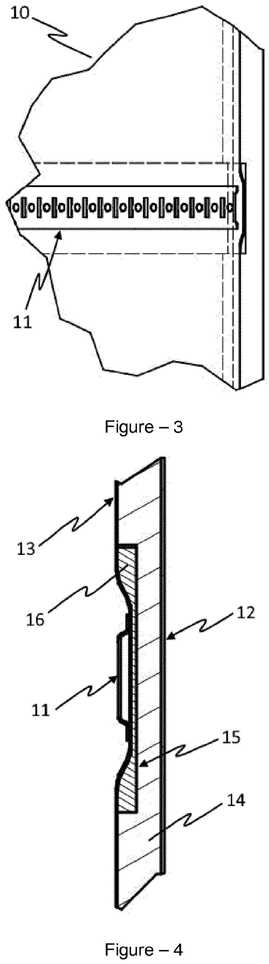

Figure 1 shows section view of transport compartment (9) that incorporates panel structure (10) in our invention. Figure 2 and 3 show general and close-up views of panel structure (10), respectively. Figure 4 shows section view of panel structure (10) that incorporates transportation rail (11) used for cargo tie down in transport compartments (9) of all kinds of vehicles. The developed panel structure (10) generally comprises an exterior board (12) that forms its outer surface, protects from external factors such as dust and rain and contributes structural integrity; an interior board (13) that forms its inner surface, contributes to structural integrity by protecting from internal factors such as dust and water, and hosts the assembling process of transportation rail (11); filling material (14) that provides structural support between exterior (12) and interior boards (13), and offer isolation against factors such as heat and sound; at least one assembly slot (15) of filling material (14) that is formed on the surface of interior board (13); and a mold (16) that is placed on assembly slot (15) and enables the interior board (13) to be shaped as desired without any damage.

Transportation rail (11), which incorporates elements to fix load such as holes and hooks, is connected to the gap on the interior board (13) formed by means of mold (16) through riveting or gluing. This way, transportation rail (11) embedded into panel structure (10) does not allow for reduction of interior volume in transport compartment (9). Moreover, it prevents the transported to load to be damaged by protruding on interior board (13).

Exterior board (12) and interior board (13) were manufactured with fiber-reinforced material in a preferred structure of the invention. Fiber-reinforced material not only proves advantages in terms of weight, but also has high strength. Besides, it is affected by external factors at minimum.

The following process steps are used basically in the manufacturing method of panel structure (10) which does no reduce interior volume thanks to embedded transportation rails (11) used for cargo tie down in transport compartment (9) of all kinds of vehicles:
- exterior board fixation by spreading exterior board (12) onto vacuum or press machine and fixing,
- application of filling material by applying and gluing filling material (14) on exterior board (12),
- opening assembly slots (15) by slotting the filling material (14),
- assembly of mold (16) by placing them on assembly slots (15),
- spreading of interior board (13) on molds (16) with filling material (14),
- pressuring interior board in order that the spread interior board (13) takes the shape of molds (16),
- assembly of transportation rail (11) by fixing it in the gap on mold (16) via methods such as riveting, gluing, etc. after interior board (13) is shaped as desired.

Manufacturing method in our invention can be generally applied to all types of panel structure (10) such as roof panel, side panel, front panel, rear door panel and floor panel. Embedded transportation rails (11) can be formed as much as needed during panel structuring (10) allowing for fixation of loads.

## Claims

1. The invention is the panel structure (10) possessing transportation rail (11) that is used for the purpose of cargo tie down in transport compartments (9) of all kinds of vehicles; and it is characterized with the following:
- an exterior board (12) that forms the outer surface of panel structure (10), protects from external factors such as dust and rain and contributes structural integrity,
- an interior board (13) that forms the inner surface of panel structure (10), contributes to structural integrity by protecting from internal factors such as dust and water, and hosts the assembling process of transportation rail (11),
- filling material (14) that provides structural support between the exterior (12) and interior boards (13) above, and offer isolation against factors such as heat and sound,
- at least one assembly slot (15) of filling material (14) that is formed on the surface of interior board (13),
- a mold (16) that is placed on this assembly slot (15) and enables the interior board (13) to be shaped as desired without any damage.

2. It is a panel structure (10) in accordance with Claim 1, and the mentioned exterior board (12) and interior board (13) are manufactured from fiber-reinforced material.

3. It is a panel structure (10) in accordance with Claim 1, and its manufacturing method comprises the following:
- exterior board fixation by spreading exterior board (12) onto vacuum or press machine and fixing,
- application of filling material by applying and gluing filling material (14) on exterior board (12),
- opening assembly slots (15) by slotting the filling material (14),
- assembly of mold (16) by placing them on assembly slots (15),
- spreading of interior board (13) on molds (16) with filling material (14),
- pressuring interior board in order that the spread interior board (13) takes the shape of molds (16),
- assembly of transportation rail (11) by fixing it in the gap on mold (16) via methods such as riveting, gluing, etc. after interior board (13) is shaped as desired.
